(19) Europäisches Patentamt
European Patent Office
Office européen des brevets

(11) **EP 3 169 137 B1**

(12) **EUROPÄISCHE PATENTSCHRIFT**

(45) Veröffentlichungstag und Bekanntmachung des Hinweises auf die Patenterteilung:
**04.12.2019 Patentblatt 2019/49**

(51) Int Cl.:
*H05B 3/26* (2006.01)     *H05B 3/00* (2006.01)
*H05B 3/66* (2006.01)     *F27B 9/06* (2006.01)
*F27D 11/00* (2006.01)

(21) Anmeldenummer: **16163897.8**

(22) Anmeldetag: **05.04.2016**

(54) **INFRAROT-ERWÄRMUNGSEINHEIT**

INFRARED HEATING UNIT

CHAUFFAGE INFRAROUGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **16.11.2015 DE 102015119763**

(43) Veröffentlichungstag der Anmeldung:
**17.05.2017 Patentblatt 2017/20**

(73) Patentinhaber: **Heraeus Noblelight GmbH**
**63450 Hanau (DE)**

(72) Erfinder:
• **Honig, Michael**
**63517 Rodenbach (DE)**
• **Gaab, Lotta**
**64289 Darmstadt (DE)**
• **Zissing, Holger**
**36103 Flieden (DE)**
• **Weber, Jürgen**
**63801 Kleinostheim (DE)**
• **Tittmann, Michael**
**63454 Hanau (DE)**

(74) Vertreter: **Staudt, Armin Walter**
**Sandeldamm 24a**
**63450 Hanau (DE)**

(56) Entgegenhaltungen:
EP-A1- 0 495 770     WO-A1-2015/067688
US-A- 4 245 613     US-A- 4 833 301

EP 3 169 137 B1

## Beschreibung

### Technisches Gebiet

Die vorliegende Erfindung betrifft eine Infrarot-Erwärmungseinheit laut dem Oberbegriff des Anspruchs 1.

In industriellen Elektrowärmeöfen zum Erwärmen von Heizgut auf Temperaturen oberhalb von 600 °C werden häufig Infrarotstrahler als Heizeinrichtung eingesetzt, die kurzwellige, mittelwellige und/oder langwellige Infrarotstrahlung emittieren. Der Wärmetransport vom elektrischen Heizelement zu dem Heizgut erfolgt durch Wärmeleitung, Konvektion und/oder Wärmestrahlung. Dabei stellt sich grundsätzlich das Problem, die zur Verfügung stehende Bestrahlungsleistung möglichst effektiv (mit hoher Leistungseffizienz) und gleichzeitig mit hoher Homogenität auf das Heizgut abzustrahlen. Infrarotstrahler zeigen eine punkt- oder linienförmige Abstrahlcharakteristik für die Infrarotstrahlung, oder - als Infrarot-Flächenstrahler - eine flächig ausgedehnte zwei- oder dreidimensionale Abstrahlcharakteristik, die an die Geometrie der zu beheizenden Oberfläche des Heizguts angepasst sein kann und eine homogene Bestrahlung zwei- oder dreidimensional gestalteter Oberflächen ermöglicht.

Die Infrarotstrahler sind in der Regel mit einem elektrischen Heizelement aus einem Widerstandsmaterial ausgestattet, das bei Stromdurchfluss Wärme erzeugt. Weit verbreitet sind rohrförmige Infrarotlampen, bei denen ein wendelförmiger Widerstandsdraht mit Abstand und ohne wesentlichen Kontakt von einem Hüllrohr aus Quarzglas umgeben ist. Bei anderen Ausführungsformen von Infrarotstrahlern dient das elektrische Heizelement, wie etwa ein Draht, eine Bahn oder eine Schicht aus dem Widerstandsmaterial, zur Erwärmung eines anderen, nicht elektrischen, passiven Heizelements, das im Folgenden auch als "Heizsubstrat" bezeichnet wird.

### Stand der Technik

Um eine hohe Prozesstemperatur bei gleichzeitig geringem Energieverlust zu gewährleisten, ist der Prozessraum von einer isolierenden Ofenauskleidung umgeben, die beispielsweise in traditionellen Öfen aus Isoliersteinen besteht. Ein elektrisch beheizter Muffelbrennofen mit einem Gehäuse, das mit einer Ofenauskleidung aus Schamotte versehen ist, ist beispielsweise aus der DE 1 973 753 U bekannt. Als Heizeinrichtung dienen Infrarotstrahler mit quarzumschlossenen Heizspiralen, die im Bereich der Deckenwandung des Prozessraumes angeordnet sind. Derartige Ofenauskleidungen haben allerdings eine hohe Wärmekapazität, was zu langen Aufheiz- und Abkühlzeiten und niedrigen Energiewirkungsgraden führt. Der Einsatz von Ofenauskleidungen aus Schamotte limitiert zudem die Reinheitsbedingungen im Prozessraum.

Diese Nachteile vermeidet ein aus der DE 10 2012 003 030 A1 bekannter Ofen mit einer Ofenauskleidung, die aus achsparallel angeordneten Quarzglasrohren aufgebaut ist. Die Quarzglasrohre sind dabei auf ihrer dem Prozessraum zugewandten Seite mittels einer Verbindungsmasse aus opakem Quarzglas miteinander verbunden, die gleichzeitig als diffuser Reflektor wirkt, so dass die Infrarotstrahlung an den Begrenzungswänden des Prozessraums reflektiert wird. Auf diese Weise wird ein hoher Wirkungsgrad bis zu 90% erreicht.

Aus der US 4 133 667 A ist ein Durchlaufofen zur Wärmebehandlung von Glasscheiben bekannt. Im Prozessraum sind oberhalb und unterhalb einer Transporteinrichtung Infrarotstrahler angeordnet. Die Glasscheiben werden mittels der Transporteinrichtung auf Rollen aus Quarzglas aufliegend durch den Prozessraum transportiert. Eine ähnliche Transporteinrichtung mit Quarzglas-Rollen ist auch bei dem aus der JP 4715019 B2 bekannten Durchlaufofen beschrieben. Die US 4 833 301 A zeigt einen Durchlaufofen für eine Reflow-Lötanlage, bei dem die zu verlötenden Leiterplatten kontinuierlich mittels eines Transportbandes durch eine Vielzahl von Heizzonen geführt werden, die mit plattenförmigen Infrarotstrahlern (IR-Panels) ausgestattet sind. Die Funktionsweise der IR-Panels beruht auf dem Prinzip der Sekundäremission. Sie weisen ein plattenförmiges Substrat mit darauf aufgebrachtem Widerstandselement auf, das Infrarotstrahlung auf das Substrat überträgt. Ein Ausführungsbeispiel zeigt einen solchen IR-Panel mit einem Primäremitter in Form einer geätzten Metallfolie, die auf einer Seite mit einer 38 mm dicken Isolierschicht aus $Al_2O_3$ und $SiO_2$ bedeckt ist, und auf der gegenüberliegenden Seite auf dem Sekundäremitter in Form einer 1 mm dicken Gewebeschicht aus 98% Aluminiumoxid und 2% organischen Zusätzen. Im Durchlaufofen oberhalb des Transportbandes sind Decken-IR-Panels (top panel emitter) angeordnet, und unterhalb des Transportbandes sind Boden-IR-Panels (bottom panel emitter) angeordnet. Zur thermischen Isolierung sind in jeder ist der Zwischenraum zwischen der oberen Ofenwandung und den Decken-IR-Panels ist mit Aluminiumoxidwolle aufgefüllt, die Unterseite der Boden-IR-Panels ist mit einer Isolierplatte bedeckt und die Seitenwandungen der Heizzonen sind mit einer Schicht aus einer handelsüblichen $Al_2O_3$-$SiO_2$-Keramik (marinite) versehen, die gleichzeitig als IR-Reflektor dient.

Die EP 0 495 770 A1 offenbart eine Infrarot-Erwärmungseinheit mit einem Heizelement in Form einer Trägerplatte aus Stahlblech, die mit einer dielektrischen Oberflächenschicht versehen ist, auf der eine Leiterbahn aufgebracht ist.

Aus der US 4,245,613 A ist ein Tunnelofen zum Erwärmen von Lebensmitteln bekannt, die auf einem Transportband aufliegend vom Einlass zum Auslass des Tunnelofens bewegt werden. Oberhalb und unterhalb des Transportbandes befinden sich Infrarot-Flächenstrahler.

Für die Homogenität der Bestrahlung spielt der Abstand zwischen dem Heizgut und dem Infrarotstrahler eine wichtige Rolle. Für eine achsparallele Anordnung mehrerer länglicher Infrarotlampen besagt eine empirische Faustformel, dass der für eine homogene Bestrahlung erforderliche Mindestabstand etwa dem 1,5-fachen des Mittenabstands zwischen den Infrarotlampen entspricht. Demnach sind für eine homogene Bestrahlung ein geringer Abstand zwischen den einzelnen Infrarotlampen und ein großer Abstand zwischen der Lampen-Anordnung und dem Heizgut förderlich. Der erst genannten Alternative (enger Lampen-Lampen-Abstand) sind physikalische und technologische Grenzen gesetzt und sie zieht höhere Fertigungskosten nach sich. Die zweitgenannte Alternative (großer Infrarotlampe-Heizgut-Abstand) führt zu einem geringeren Wirkungsgrad der eingesetzten Bestrahlungsleistung und einer vergleichsweise geringen Strahlungsleistung pro Heizflächeneinheit.

Bei der aus WO1999/025154 A1 bekannten Ausführungsform eines Infrarot-Flächenstrahlers wird ein flächiges, planares, rohr- oder polyederförmiges Heizsubstrat aus Quarzglas eingesetzt, das in direktem und kontinuierlichen Kontakt mit einem elektrischen Widerstandselement steht. Das Widerstandselement hat beispielsweise Mäanderform und wird über Folien-, Siebdruck- oder Dünnschichttechnik auf die Heizsubstratfläche aufgebracht und anschließend eingebrannt.

Bei dieser Ausführungsform erhitzt das Heizelement nicht ein umgebendes Hüllrohr, sondern durch unmittelbaren und flächig ausgedehnten Kontakt in Form der Leiterbahn direkt das Quarzglas-Heizsubstrat, so dass der Wärmeübertrag zwischen Heizelement und Heizsubstrat überwiegend durch Wärmeleitung und Konvektion erfolgt, was sich auf Homogenität und Wirkungsgrad der Wärmeübertragung positiv auswirken kann.

## Technische Aufgabenstellung

Quarzglas besitzt eine gute Korrosions-, Temperatur- und Temperaturwechselbeständigkeit und es steht in hoher Reinheit zur Verfügung. Daher erfüllt Quarzglas als Heizsubstrat-Werkstoff auch bei Hochtemperatur-Heizprozessen grundsätzlich hohe Anforderungen hinsichtlich Reinheit, Temperaturstabilität und Inertheit. Andererseits zeigt Quarzglas eine vergleichsweise geringe Wärmeleitfähigkeit und wird sogar häufig als Wärmeisolator eingesetzt. Wird der Werkstoff als passives Heizsubstrat eingesetzt, das mittels eines auf einer Kontaktfläche aufgebrachten Widerstandselement erhitzt wird, so besteht bei geringen Wandstärken die Gefahr, dass eine inhomogene Wärmeverteilung auf Seite der Kontaktfläche auf der gegenüberliegenden Heizsubstratseite erhalten bleibt. Im Extremfall wird das eigentliche aktive elektrische Heizelement auf der gegenüberliegenden Heizsubstratseite abgebildet. Dem kann nur durch eine hohe Belegungsdichte mit Heizelement-Material begegnet werden, was aber kostspielig ist. Bei dicken Heizsubstrat-Wandstärken leidet hingegen die Leistungseffizienz und schnelle Temperaturwechsel werden unmöglich, die ein rasches Aufheizen und Abkühlen des Heizsubstrats voraussetzen.

Der Erfindung liegt die Aufgabe zugrunde, eine Infrarot-Erwärmungseinheit bereitzustellen, die eine energieeffiziente und gleichmäßige (homogene) Erwärmung des Heizgutes mit Infrarotstrahlung auf Temperaturen auch oberhalb von 600 °C ermöglicht.

## Allgemeine Beschreibung der Erfindung

Diese Aufgabe wird ausgehend von einem Infrarot-Erwärmungseinheit der eingangs genannten Gattung erfindungsgemäß durch eine Infrarot-Erwärmungseinheit laut Anspruchs 1 gelöst.

Die Ofenauskleidung besteht bei der erfindungsgemäßen Infrarot-Erwärmungseinheit mindestens teilweise aus einem Werkstoff, der bei thermischer Anregung mittels Widerstandsmaterial-Leiterbahn zur Abgabe von Infrarotstrahlung angeregt werden kann. Es handelt sich insoweit um eine thermisch aktive oder thermisch aktivierbare Ofenauskleidung. Der Werkstoff ist dotiertes Quarzglas, in das eine Zusatzkomponente eingelagert ist, die insbesondere bei thermischer Anregung im infraroten Spektralbereich absorbiert. Dieser Werkstoff wird im Folgenden auch kurz als "IR-Schwarzglas" bezeichnet, wobei sich diese Bezeichnung nicht auf die visuelle Färbung des Werkstoffs bezieht, sondern darauf, dass er Strahlung im infraroten Wellenlängenbereich bei Raumtemperatur oder bei erhöhter Temperatur absorbiert.

Das IR-Schwarzglas bildet somit mindestens einen Teil der Ofenauskleidung und gleichzeitig bildet es einen Teil der Heizeinrichtung - und zwar in Verbindung mit der elektrischen Leiterbahn aus Widerstandsmaterial zur thermischen Anregung des IR-Schwarzglases. In denjenigen Bereichen der Ofenauskleidung, die durch elektrische Leiterbahnen thermisch angeregt sind, ist das IR-Strahlung emittierende IR-Schwarzglas somit ein Heizsubstrat und Teil der Heizeinrichtung; in anderen Bereichen der Ofenauskleidung mit IR-Schwarzglas, die nicht thermisch angeregt sind, ist das IR-Schwarzglas lediglich Teil der Ofenauskleidung. Dies gilt auch in solchen Bereichen der Ofenauskleidung mit IR-Schwarzglas, die mit elektrischen Leiterbahnen belegt sind und daher funktionell thermisch anregbar wären, die thermische Anregung aber nicht stattfindet.

Im einfachsten und besonders bevorzugten Fall besteht die Ofenauskleidung vollständig aus dem IR-Schwarzglas. In anderen Ausführungsformen besteht die Ofenauskleidung nur zum Teil aus dem IR-Schwarzglas. Unabhängig von der jeweiligen Ausführungsform ist ein einzelner Bereich oder es sind mehrere Bereiche der Ofenauskleidung als Heizsubstrat ausgebildet. Sofern bei den folgenden Erläuterungen das Heizsubstrat im Singular gefasst wird, sollen stets auch mehrere Heizsubstrate umfasst sein.

Bei thermischer Anregung durch die Leiterbahn ist das Heizsubstrat somit das eigentliche, IR-Strahlung emittierende Element. Der Heizsubstrat-Werkstoff ent-

hält Quarzglas (SiO$_2$ in amorpher Form), das hinsichtlich Gewicht und Volumen den größten Anteil des Heizsubstrat-Werkstoffs ausmacht und maßgeblich dessen mechanische und chemische Eigenschaften bestimmt; beispielsweise die Temperaturbeständigkeit, die Festigkeit und die Korrosionseigenschaften.

Das Quarzglas kann außer SiO$_2$ in einer Menge bis maximal 10 Gew.-% andere oxidische, nitridische oder carbidische Komponenten enthalten. Quarzglas besitzt die eine gute Korrosions-, Temperatur- und Temperaturwechselbeständigkeit und es steht in hoher Reinheit zur Verfügung. Daher bietet es sich auch bei Hochtemperatur-Heizprozessen mit Temperaturen bis zu 1100 °C als Heizsubstrat-Werkstoff an. Durch einen niedrigen Cristobalitgehalt von 1% oder weniger wird eine geringe Entglasungsneigung und damit eine geringe Rissbildungsgefahr beim Einsatz gewährleistet. Damit wird auch hohen Anforderungen an Partikelfreiheit, Reinheit und Inertheit genügt, wie sie beispielsweise bei Halbleiterfertigungsprozessen bestehen.

Da das Heizsubstrat im Wesentlichen aus Quarzglas, also einem amorphem Werkstoff besteht, kann es leicht in die für den Anwendungsfall geeignete geometrische Gestalt gebracht werden, also beispielsweise in Form ebener, gebogener oder gewellter Platten, in Zylinder oder Rohrform mit rundem, ovalem oder polygonalem Querschnitt oder Schalen-, Dom- oder Tiegelform.

Die im Quarzglas eingelagerte Zusatzkomponente bildet eine eigene amorphe oder kristalline Phase, die in der Quarzglasmatrix gleichmäßig oder gezielt ungleichmäßig dispergiert ist. Die Zusatzkomponente bestimmt maßgeblich die optischen und thermischen Eigenschaften des Heizsubstrats; genauer gesagt, sie bewirkt eine Absorption im infraroten Spektralbereich, das ist der Wellenlängenbereich zwischen 780 nm und 1 mm. Die Zusatzkomponente zeigt insbesondere bei thermischer Anregung für mindestens einen Teil der Strahlung in diesem Spektralbereich eine Absorption, die höher ist als die der Matrixkomponente.

Die Phasenbereiche der Zusatzkomponente wirken in der Quarzglasmatrix als optische Störstellen und wirken selbst wärmeabsorbierend. Laut Kirchhoff'schem Strahlungsgesetz entsprechen spektraler Absorptionsgrad $\alpha_\lambda$ und spektraler Emissionsgrad $\varepsilon_\lambda$ eines realen Körpers im thermischen Gleichgewicht einander.

$$\alpha_\lambda = \varepsilon_\lambda \quad (1)$$

Die Zusatzkomponente führt somit dazu, dass der Heizsubstrat-Werkstoff Infrarotstrahlung emittiert. Der spektrale Emissionsgrad $\varepsilon_\lambda$ lässt sich bei bekannten gerichtet-hemisphärischen spektralen Reflexionsgrad $R_{gh}$ und Transmissionsgrad $T_{gh}$ wie folgt berechnen:

$$\varepsilon_\lambda = 1 - R_{gh} - T_{gh} \quad (2)$$

Unter dem "spektralen Emissionsgrad" wird der "spektrale normale Emissionsgrad" verstanden. Dieser wird anhand eines Messprinzips ermittelt, das unter der Bezeichnung "Black-Body Boundary Conditions" (BBC) bekannt ist und veröffentlicht ist in "DETERMINING THE TRANSMITTANCE AND EMITTANCE OF TRANSPARENT AND SEMITRANSPARENT MATERIALS AT ELEVATED TEMPERATURES"; J. Manara, M. Keller, D. Kraus, M. Arduini-Schuster; 5th European Thermal-Sciences Conference, The Netherlands (2008).

Das mit der Zusatzkomponente dotierte Quarzglas hat eine höhere Wärmestrahlungs-Absorption als dies ohne die Zusatzkomponente der Fall wäre. Dadurch ergibt sich eine verbesserte Wärmeleitung von der Leiterbahn in das Heizsubstrat, eine schnellere Verteilung der Wärme und eine höhere Abstrahlungsrate auf das Heizgut. Dadurch gelingt es, eine höhere Strahlungsleistung pro Flächeneinheit bereitzustellen und auch bei dünnen Heizsubstrat-Wandstärken und/oder bei einer vergleichsweise geringen Leiterbahn-Belegungsdichte eine homogene Abstrahlung und ein gleichförmiges Temperaturfeld zu erzeugen.

Im Heizsubstrat-Werkstoff liegt die Zusatzkomponente bevorzugt mindestens zum Teil als elementares Silicium vor und ist in einer Menge eingelagert ist, die im Heizsubstrat-Werkstoff für Wellenlängen zwischen 2 und 8 $\mu$m einen spektralen Emissionsgrad $\varepsilon$ von mindestens 0,6 bei einer Temperatur von 600 °C und einen spektralen Emissionsgrad $\varepsilon$ von mindestens 0,75 bei einer Temperatur von 1000 °C bewirkt.

Der Heizsubstrat-Werkstoff verfügt demnach über ein hohes Absorptions- und Emissionsvermögen für Wärmestrahlung zwischen 2 $\mu$m und 8 $\mu$m, also in einem Wellenlängenbereich im infraroten Strahlungsspektrum. Dies vermindert die Reflexion an den Heizsubstrat-Oberflächen, so dass sich unter der Annahme einer vernachlässigbar geringen Transmission ein Reflexionsgrad für Wellenlängen zwischen 2 und 8 $\mu$m und bei Temperaturen oberhalb von 1000 °C bei maximal 0,25 und bei Temperaturen von 600 °C von maximal 0,4 ergibt.

Durch die gleichmäßige Abstrahlung und hohe Emissivität kann der Abstand zwischen Heizgut und Heizsubstrat gering ausfallen, wodurch die Bestrahlungsintensität erhöht und die Effizienz entsprechend zunimmt. Für manche Anwendungen liegt der Abstand bevorzugt bei weniger als 5 mm. So beispielsweise bei so genannten "Rolle zu Rolle-Fertigungsprozessen", bei denen ein bahn- oder folienförmiges Heizgut mit hoher Geschwindigkeit am Heizsubstrat vorbeigeführt wird. Der geringe Abstand ermöglicht hohe Leistungsdichten von mehr als 100 und sogar mehr als 200 kW/m$^2$ auf dem Heizgut. Die Ofenauskleidung mit hoher Emissivität trägt zu einem hohen Wirkungsgrad des Heizprozesses bei. Verluste werden auch dadurch minimiert, dass Streuanteile effektiv wieder von der Ofenauskleidung absorbiert und sogleich wieder emittiert werden können. Nicht reproduzierbare Aufheizungen durch reflektierte Wärmestrahlung werden so vermindert, was zu einer gleichmäßigen oder gezielt ungleichmäßigen Temperaturverteilung beiträgt.

Bei einer bevorzugten Ausführungsform des Infrarotstrahlers enthält die Zusatzkomponente ein Halbleitermaterial in elementarer Form, vorzugsweise elementares Silicium. Die feinteiligen Bereiche der Halbleiter-Phase wirken in der Matrix einerseits als optische Störstellen und führen dazu, dass der Heizsubstrat-Werkstoff visuell - je nach Schichtdicke - schwarz oder grau-schwärzlich erscheint. Andererseits haben die Störstellen auch Auswirkungen auf die Wärmeabsorption des Heizsubstrat-Werkstoffs insgesamt. Dies ist im Wesentlichen auf die Eigenschaften der fein verteilten Phasen aus der elementar vorliegenden Si-Phase zurückzuführen, wonach zum einen die Energie zwischen Valenzband und Leitungsband (Bandlückenenergie) mit der Temperatur abnimmt und zum anderen bei ausreichend hoher Aktivierungsenergie Elektronen vom Valenzband in das Leitungsband gehoben werden, was mit einem deutlichen Anstieg des Absorptionskoeffizienten einhergeht. Die thermisch aktivierte Besetzung des Leitungsbandes führt dazu, dass das Halbleitermaterial bei Raumtemperatur für bestimmte Wellenlängen (wie etwa ab 1000 nm) in gewissem Umfang transparent sein kann und bei hohen Temperaturen undurchsichtig wird. Mit steigender Temperatur des Heizsubstrat-Werkstoffs können daher Absorption und Emissionsgrad sprungartig zunehmen. Dieser Effekt hängt unter anderem von Struktur (amorph/kristallin) und Dotierung des Halbleiters ab. Reines Silicium zeigt beispielsweise ab etwa 600 °C eine merkliche Emissionszunahme, die etwa ab etwa 1000 °C eine Sättigung erreicht.

Das Halbleitermaterial und insbesondere das vorzugsweise eingesetzte, elementare Silicium bewirken daher eine Schwarzfärbung des glasigen Matrix-Werkstoffs und zwar bei Raumtemperatur, aber auch bei erhöhter Temperatur oberhalb von beispielsweise 600 °C. Dadurch wird eine gute Abstrahlungscharakteristik im Sinne einer breitbandigen, hohen Emission bei hohen Temperaturen erreicht. Das Halbleitermaterial, bevorzugt das elementare Silicium, bildet dabei eine in der Matrix dispergierte, eigene Si-Phase. Diese kann mehrere Halbmetalle oder Metalle enthalten (Metalle jedoch maximal bis zu 50 Gew.-%, besser nicht mehr als 20 Gew.-%; bezogen auf den Gewichtsanteil der Zusatzkomponente). Dabei zeigt der Heizsubstrat-Werkstoff keine offene Porosität, sondern allenfalls eine geschlossene Porosität von weniger als 0,5 % und eine spezifische Dichte von mindestens 2,19 g/cm$^3$. Er ist daher für Anwendungen geeignet, bei denen es auf Reinheit oder Gasdichtheit des Heizsubstratwerkstoffs ankommt.

Die Wärmeabsorption des Heizsubstrat-Werkstoffs hängt vom Anteil der Zusatzkomponente ab. Der Gewichtsanteil von Silicium sollte vorzugsweise mindestens 0,1% betragen. Andererseits kann ein hoher Silicium-Volumenanteil die chemischen und mechanischen Eigenschaften der Quarzglas-Matrix beeinträchtigen. Im Hinblick darauf liegt der Gewichtsanteil der Gewichtsanteil der Silicium-Zusatzkomponente bevorzugt im Bereich zwischen 0,1 und 5 %.

Ein besonders hoher Emissionsgrad ist erzielbar, wenn das Silicium als eigene Silicium-Phase vorliegt und eine nicht-sphärische Morphologie mit maximalen Abmessungen von im Mittel weniger als 20 μm, vorzugsweise jedoch mehr als 3 μm aufweist.

Die nicht-sphärische Morphologie der Silicium-Phase trägt dabei auch zu einer hohen mechanischen Festigkeit und zu einer geringen Rissbildungsneigung des Heizsubstrat-Werkstoffs bei. Die Angabe "maximale Abmessung" bezieht sich auf die in Schliff erkennbare längste Ausdehnung eines isolierten Bereichs mit Silicium-Phase. Der Medianwert aller längsten Ausdehnungen in einem Schliffbild bildet den oben genannten Mittelwert.

Bauteile aus einem Kompositwerkstoff mit einer Matrix aus Quarzglas und darin eingelagerter Siliciumphase sind bekannt. Gemäß der WO 2015067688 A1 werden daraus beispielsweise Reaktoren, Armaturen oder Waferhalter zum Einsatz in einem Oxidations- oder Temperprozess, der Epitaxie oder der chemischen Gasphasenabscheidung gefertigt. Für den Einsatz als thermisch aktivierbares Ofenauskleidungsmaterial gemäß vorliegender Erfindung wird das Heizsubstrat mit einer Leiterbahn aus elektrischem Widerstandmaterial belegt, die bevorzugt als eingebrannte Dickfilmschicht ausgeführt ist.

Derartige Dickfilmschichten werden beispielsweise aus Widerstandspaste mittels Siebdruck oder aus metallhaltiger Tinte mittels Tintenstrahldruck erzeugt und anschließend bei hoher Temperatur eingebrannt. Die Leiterbahn besteht vorzugsweise aus einem edelmetallhaltigen Werkstoff, der an Luft zu keinem die Lebensdauer verkürzenden oxidierenden Reaktionsprodukt führt, wie beispielsweise aus Platin, Gold, Silber und darauf basierenden Legierungen.

Im Hinblick auf eine möglichst homogene Temperaturverteilung hat es sich als vorteilhaft erwiesen, wenn die Leiterbahn als Linienmuster ausgeführt ist, das die Kontakt-Oberfläche so bedeckt, dass zwischen benachbarten Leiterbahn-Abschnitten ein Zwischenraum von mindestens 1 mm, bevorzugt mindestens 2 mm verbleibt.

Die Leiterbahn verläuft beispielsweise in einem spiral- oder mäanderförmigen Linienmuster. Das hohe Absorptionsvermögen des Heizsubstratwerkstoffs ermöglicht auch bei vergleichsweise geringer Leiterbahn-Belegungsdichte der Heizfläche eine homogene Abstrahlung. Eine geringe Belegungsdichte ist dadurch gekennzeichnet, dass der minimale Abstand zwischen benachbarten Leiterbahn-Abschnitten 1 mm oder mehr, bevorzugt 2 mm oder mehr beträgt. Ein großer Abstand zwischen den Leiterbahnabschnitten vermeidet Überschläge, die insbesondere beim Betrieb mit hohen Spannungen unter Vakuum auftreten können.

Der erfindungsgemäße Infrarotstrahlers zeichnet sich auch dadurch aus, dass das Heizsubstrat eine der Leiterbahn zugewandte Fläche aufweist, und dass mindestens ein Teil dieser Fläche mit einer Deckschicht aus porösem Quarzglas belegt ist, wobei bevorzugt in die Deckschicht die Leiterbahn mindestens teilweise eingebettet ist.

Die Deckschicht aus opakem Quarzglas dient dabei als diffuser Reflektor und sie schützt und stabilisiert gleichzeitig die Leiterbahn. Die Wirkung und die Herstellung einer derartigen Deckschicht aus opakem Quarzglas sind bekannt und beispielsweise in der WO 2006/021416 A1 beschrieben. Sie wird aus einer Dispersion erzeugt, die amorphe $SiO_2$-Teilchen in einer Flüssigkeit enthält. Diese wird auf die der Leiterbahn zugewandte Heizsubstrat-Fläche aufgetragen, zu einer Grünschicht getrocknet und diese bei hoher Temperatur gesintert. Das Sintern der Grünschicht und das Einbrennen der Leiterbahn erfolgt bevorzugt in ein und demselben Heizprozess.

Für viele industrielle Heizanwendungen ist eine Ausführungsform der erfindungsgemäßen Infrarot-Erwärmungseinheit geeignet, bei der die Ofenauskleidung eine Oberseite aus dem dotierten Quarzglas aufweist.

Typischerweise ist die Oberseite eine dem Heizgut unmittelbar gegenüberliegende Seite des Prozessraums. Die Oberseite kann dabei auch als beheizte Oberfläche dienen, indem sie als Heizsubstrat ausgebildet und mit Leiterbahnen für die thermische Anregung belegt ist. Die Leiterbahnen befinden sich dabei bevorzugt an der dem Prozessraum abgewandten Seite des Heizsubstrats.

Im einfachsten Fall besteht die Ofenauskleidung vollständig aus dem dotierten Quarzglas. Der Prozessraum kann dabei allseitig von der Ofenauskleidung aus IR-Schwarzglas umschlossen sein. Durch einen quasi geschlossenen Prozessraum wird die darin erzeugte Konvektion zur Erwärmung des Heizguts mit ausgenutzt. In einer anderen Ausführungsform weist der Prozessraum eine offene Seite, eine Öffnung oder einen Durchlass auf, wie dies beispielsweise bei Durchlauföfen regelmäßig der Fall ist.

Es hat sich bewährt, wenn das Heizsubstrat plattenförmig mit einer Plattendicke von weniger als 5 mm ausgebildet ist.

Dünne Heizsubstrate verfügen über eine geringe thermische Masse und ermöglichen schnelle Temperaturwechsel. Eine Zwangskühlung ist dafür nicht erforderlich.

Eine besonders bevorzugte Ausführungsform der erfindungsgemäßen Infrarot-Erwärmungseinheit ist als Durchlaufofen ausgelegt und verfügt zum Transport von Heizgut durch den Prozessraum über eine Transporteinrichtung, die sich durch den Prozessraum hindurch erstreckt und die Auflageelemente aus Quarzglas aufweist, auf denen das Heizgut gelagert ist.

Diese Ausführungsform ermöglicht eine Behandlung von Heizgut im kontinuierlichen Durchlauf. Durch die gleichmäßige IR-Abstrahlung und die hohe Emissivität kann der Abstand zwischen Heizgut und Heizsubstrat gering sein, wodurch sich die Bestrahlungsintensität erhöht und die Effizienz entsprechend zunimmt. Das Heizgut erfährt daher auch im Durchlauf eine gleichmäßige (homogene) Erwärmung auf beispielsweise 1000°C.

Die Auflageelemente für das Heizgut bestehen aus Quarzglas, insbesondere aus undotiertem Quarzglas oder aus einem mit $Al_2O_3$ dotierten Quarzglas. Neben ihrer thermischen Stabilität und ihrer chemischen Inertheit zeichnen sich derartige Auflageelemente durch eine hohe Reinheit aus. Dadurch kann auch eine hohe Reinheit des Gesamtsystems gewährleistet werden. Hinzukommt, dass schnelle Temperaturwechselvorgänge auch ohne Kühlung erreichbar sind, so dass auf strömende Kühlmedien, die stets einen hinsichtlich möglicher Verunreinigungen problematischen Partikeltransport mit sich bringen, verzichtet werden kann. Die erfindungsgemäße Infrarot-Erwärmungseinheit ist daher tauglich für den Einsatz in Halbleiterfertigungsprozessen.

Vorzugsweise weist die Transporteinrichtung zwei parallel und beabstandet voneinander verlaufende Endlos-Transportbänder auf, wobei die Auflageelemente in Form von den Abstand zwischen den Transportbändern überbrückenden Quarzglaszylindern ausgeführt und mit den Transportbändern drehfest verbunden sind. Bei einer traditionellen Transporteinrichtung für Durchlauföfen in Form eines Rollenförderers sind ebenfalls zwei parallel und beabstandet voneinander verlaufende Endlos-Transportbänder vorgesehen. Auf diesen liegen quer zur Förderrichtung angeordnete im radialen Querschnitt kreisrunde Zylinder auf und werden durch Reibung mit den Transportbändern zum Drehen gebracht, so dass das auf den Rollen aufliegende Heizgut durch die Rollbewegung durch den Prozessraum transportiert wird, ohne dass sich die Rollen selbst in Transportrichtung mitbewegen. Im Gegensatz dazu sind bei der erfindungsgemäßen Transporteinrichtung die Quarzglaszylinder mit ihren Enden drehfest mit den Transportbändern verbunden. Aufgrund der drehfesten Lagerung auf den beiden Transportbändern, werden Vibrationen minimiert; zusätzlich wird Partikelbildung durch Abrieb vermindert. Eine besonders geeignete Ausführungsform der Auflageelemente stellen so genannte handelsübliche "Zwillingsrohre" mit Doppelrohr-Geometrie dar, bei denen zwei parallele rohrförmige Kompartimente durch einen Zwischensteg getrennt sind. Zwillingsrohre aus Quarzglas weisen materialbedingt eine hohe Bruchfestigkeit auf, die durch die spezielle Geometrie als Zwillingsrohr noch wesentlich gesteigert wird.

Eine weitere Verbesserung in Bezug auf Infrarot-Erwärmungseinheit wird erreicht, wenn die Quarzglaszylinder eine Beschichtung aus opakem Quarzglas aufweisen.

Die Beschichtung aus opakem Quarzglas wirkt als diffuser Reflektor für InfrarotStrahlung und trägt so zur Effizienz der Wärmebehandlung bei. Die Beschichtung bedeckt die Quarzglaszylinder vollständig oder teilweise; sie kann eine gewisse Rauigkeit haben, so dass einem Verrutschen des Heizguts entgegenwirkt.

Die Ofenauskleidung der erfindungsgemäßen Infrarot-Erwärmungseinheit weist vorzugsweise mindestens eine beheizte Seite auf, wobei die Heizeinrichtung zur Erzeugung einer Gesamtflächenleistungsdichte im Bereich von mehr als 100 kW/m$^2$ pro beheizter Seite ausgelegt ist.

Die als Heizsubstrat ausgelegte Ofenauskleidung dient gleichzeitig als optionale Heizfläche. Bei einem allseitig geschlossenen Ofen mit rechteckigen Begrenzungswänden hat die Ofenauskleidung beispielsweise sechs ebene Seiten. Bei sechs als Heizfläche ausgelegten und eingesetzten Seiten beträgt die Gesamtflächenleistungsdichte n dem Fall mindestens 6 x 100 kW/m$^2$, vorzugsweise mindestens 6 x 200 kW/m$^2$. Bei einem Durchlaufofen mit Rechteckquerschnitt, der auf drei Seiten mit optional als Heizfläche dienenden, Ofenauskleidungen ausgelegt ist, beträgt die Gesamtflächenleistungsdichte beispielsweise mindestens 3 x 100 kW/m$^2$, vorzugsweise mindestens 3 x 200 kW/m$^2$.

Ausführungsbeispiel

Nachfolgend wird die Erfindung anhand eines Ausführungsbeispiels und einer Zeichnung näher erläutert. Dabei zeigt in schematischer Darstellung im Einzelnen:

Figur 1    einen Längsschnitt der erfindungsgemäßen Vorrichtung zur Wärmebehandlung,

Figur 2    einen Querschnitt der erfindungsgemäßen Vorrichtung zur Wärmebehandlung im Bereich des Prozessraumes,

Figur 3    eine Detailansicht der Halterung eines Auflageelements auf einem Transportband und

Figur 4    ein Heizsubstrat für den Einbau im Deckenbereich des Prozessraums.

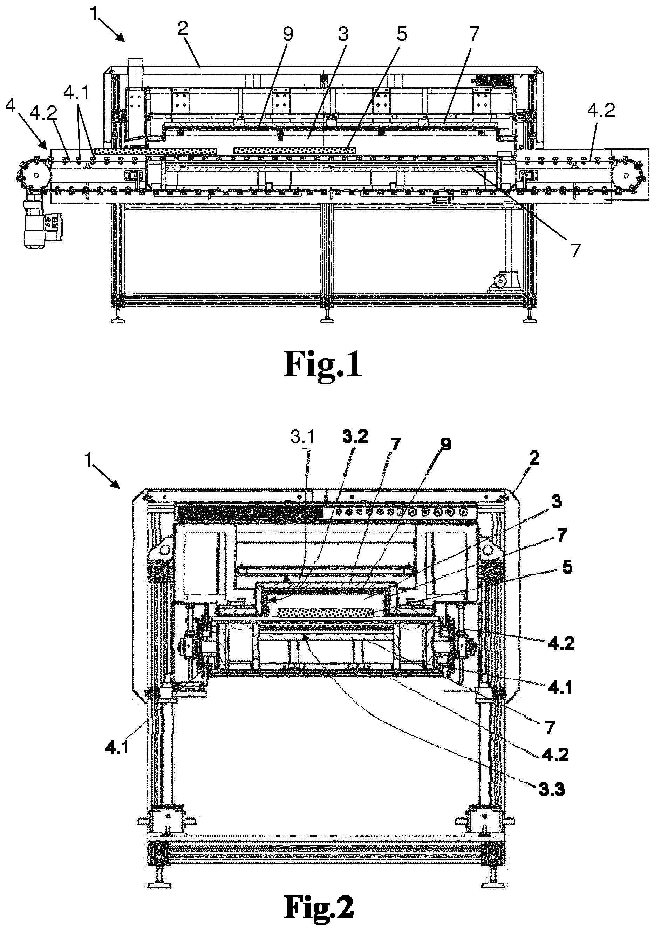

Die Figuren 1 und 2 zeigen eine Ausführungsform der erfindungsgemäßen Infrarot-Erwärmungseinheit in Form eines Durchlaufofens 1 mit einem Ofen-Gehäuse 2, in dem sich ein Prozessraum 3 zur Wärmebehandlung befindet, und der mit einem Transportsystem 4 zum kontinuierlichen Transport von Heizgut 5 durch den Prozessraum 3 ausgestattet ist.

Das Transportsystem 4 umfasst zwei parallel in einem Abstand voneinander liegende Endlos-Transportbänder 4.1 mit den Abstand zwischen den Transportbändern überbrückenden und darauf drehfest gehaltenen Trägerelementen in Form von Zwillingsrohren 4.2 aus transparentem Quarzglas, auf denen das Heizgut 5 bei der Wärmebehandlung gelagert ist.

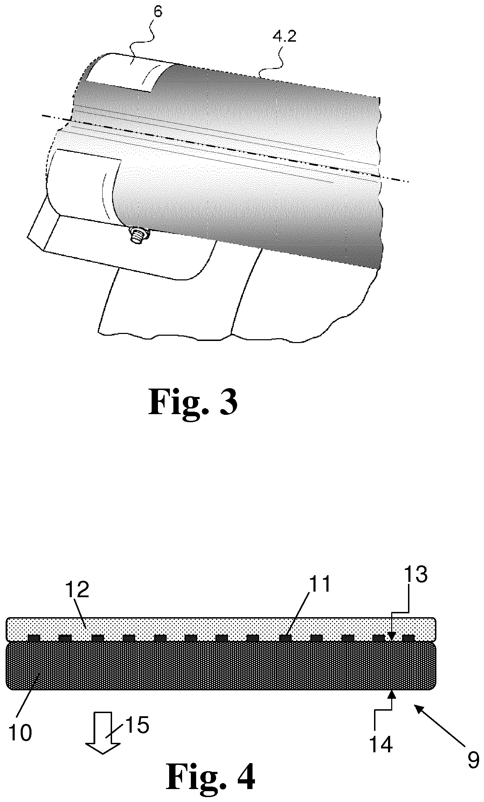

Eine Detailansicht der drehfesten Halterung der Zwillingsrohre 4.2 ist in der Figur 3 dargestellt. Eine Klemmfeder 6 umfasst das Ende eines Zwillingsrohres 4.2 und fixiert es in einer drehfesten Position an einem der Transportbänder (hier nicht dargestellt). Die Klemmfeder 6 ist mit Winkeln verbunden, die wiederum an dem einem der Transportbänder 4.1 befestigt ist.

Die Zwillingsrohre 4.2 haben Abmessungen in Bezug auf Länge x Breite x Höhe (L x B x H) von 1.000 mm x 34 mm x 14 mm; die Wandstärke beträgt circa 2 mm. Der Abstand der Zwillingsrohre 4.2 voneinander variiert je nach Gewicht und Geometrie des Heizgutes 5. Für die Verwendung der erfindungsgemäßen Vorrichtung 1 zum Einbrennen einer Goldschicht auf Quarzglasrohre für die Lampenfertigung wird üblicherweise ein Abstand von 150 mm zwischen den Zwillings-Trägerrohren eingestellt.

In Figur 2 zeigt eine gegenüber Figur 1 etwas vergrößerte Querschnittsansicht der erfindungsgemäßen Vorrichtung 1 mit Blick in den Prozessraum 3. Dieser hat eine Länge von 2.000 mm, eine Breite von 420 mm und eine Höhe (gerechnet vom Bodenbereich 3.3 bis zur Ofenauskleidung im Deckenbereich 3.1) von 145 mm.

Der Prozessraum 3 ist von einer einlagigen thermischen Isolierung 7 im Deckenbereich 3.1, Seitenbereich 3.2 und Bodenbereich 3.3 umgeben. Die Isolierung 7 besteht aus einer feuerfesten Hochtemperaturmatte auf der Basis von Aluminium- und Siliciumoxid; sie weist eine Dicke von 25 mm auf. Oberseite 3.1 und Seitenwandung 3.2 des Prozessraums 3 sind vollständig mit Platten aus einem Kompositwerkstoff (IR-Schwarzglas) ausgekleidet, bei dem in eine Matrix aus Quarzglas eine kristalline Phase aus elementarem Silicium fein dispergiert ist. Bei der die Oberseite begrenzenden Deckenplatte 9 ist ein Substrat 10 (siehe Figur 4) aus dem Kompositwerkstoff rückseitig in Kontakt mit einer mäanderförmig verlaufenden Leiterbahn 11, die in eine Reflektorschicht 12 aus opakem Quarzglas eingebettet ist. Diese Deckenplatte 9 dient gleichzeitig als Infrarotstrahler und wird weiter anhand Figur 4 noch im Detail erläutert.

Die erfindungsgemäße Vorrichtung 1 wird als Durchlaufofen (elektrische Dauerleistung 20 kW) betrieben und für einen kontinuierlichen Sinterprozess eingesetzt. Hierzu werden auf der Oberseite mit Gold beschichtete Bauteile, beispielsweise Quarzrohre mit den Abmessungen L x B x H = 1.000 x 34 x 14 mm, zum Einbrennen der Beschichtung auf die Zwillingsrohre 4.2 des Transportsystems 4 aufgelegt und mit der Geschwindigkeit von 200 mm/min durch den heißen Prozessraum 3 geführt. Es werden 10 Rohre nebeneinander aufgelegt, so dass sich ein Durchsatz von etwa 100 Rohre pro Stunde ergibt. Die Vorrichtung 1 weist eine lichte Durchgangshöhe von 100 mm (Abstand zwischen den Zwillingsrohren 4.2 des Transportsystems und dem Deckenbereich 3.1) und eine Durchgangsbreite von 420 mm auf. Der freie Abstand zwischen der Deckenplatte 9 und dem Heizgut beträgt je nach dessen Höhenabmessung beispielsweise 50 mm. Eine Kühlvorrichtung ist nicht erforderlich und auch nicht vorgesehen.

Nach dem Durchlaufen der Vorrichtung 1 weist die Beschichtung auf den Rohren eine visuell homogene Oberfläche mit sehr guter Oberflächenhaftung auf. Die Haftung des Goldes auf der Oberfläche wird mit dem Klebeband- Abrisstest ermittelt. Dieser Test beinhaltet, dass ein im Handel frei erhältliches Klebeband, zum Beispiel ein Scotch-Klebeband der Firma 3M, auf die vergoldete Oberfläche aufgebracht und mit einem Ruck wieder abgezogen wird. Ist die Haftfähigkeit des Goldes nicht ausreichend, bleiben metallische Rückstände auf der Klebefläche des Bandes zurück. Die metallisch beschichtete Oberfläche zeigte keinerlei Beeinträchtigungen durch Partikel oder Fremdstoffe, da bei der erfindungsgemäßen Vorrichtung 1 keine beweglichen Trägerelemente eingesetzt werden, die durch Reibung an dem Heizgut 5 oder an anderen Flächen Partikel freisetzen könnten. Überdies weist der Prozessraum 3 im Wesentlichen Oberflächen aus Quarzglas auf, so dass auch in diesem Bereich kontaminationsfrei und ohne Partikelgenerierung gearbeitet wird.

**Figur 4** zeigt schematisch die den Prozessraum nach oben abschließende Deckenplatte 9. Diese hat Rechteckform mit Seitenabmessungen von 105 mm x 105 mm und einer Plattenstärke von 2,5 mm. Das Substrat 10 aus dem Kompositwerkstoff wirkt visuell transluzent. Es zeigt bei mikroskopischer Betrachtung keine offenen Poren und allenfalls geschlossene Poren mit maximalen Abmessungen von im Mittel weniger als 10 $\mu$m. In der Matrix sind nicht-sphärische Phasenbereiche aus elementarem Silicium (Si-Phase) homogen verteilt. Der Gewichtsanteil der Si-Phase beträgt 5%. Die maximalen Abmessungen der Si-Phasenbereiche liegen im Mittel (Medianwert) im Bereich von etwa 1 bis 10 $\mu$m. Der Kompositwerkstoff ist gasdicht, er hat eine Dichte von 2,19 g/cm$^3$ und er ist an Luft bis zu einer Temperatur von etwa 1200 °C stabil.

Die eingelagerte Si-Phase trägt einerseits zur Opazität des Kompositwerkstoffs insgesamt bei und sie hat Auswirkungen auf die optischen und thermischen Eigenschaften des Kompositwerkstoffs. Dieser zeigt bei hoher Temperatur eine hohe Absorption von Wärmestrahlung und einen hohen Emissionsgrad.

Bei Raumtemperatur wird der Emissionsgrad des IR-Schwarzglases unter Einsatz einer Ulbrichtkugel gemessen. Diese erlaubt die Messung des gerichtethemisphärischen spektralen Reflexionsgrades $R_{gh}$ und des gerichtethemisphärischen spektralen Transmissionsgrades $T_{gh}$, woraus der normale spektrale Emissionsgrad berechnet wird. Die Messung des Emissionsgrades bei erhöhter Temperatur erfolgt im Wellenlängenbereich von 2 bis 18 $\mu$m mittels eines FTIR-Spektrometers (Bruker IFS 66v Fourier-Transformations Infrarot (FTIR)), an das über eine Zusatzoptik eine BBC-Probenkammer angekoppelt wird, anhand des oben genannten BBC-Messprinzips. Die Probenkammer verfügt dabei in den Halbräumen vor und hinter der Probenhalterung über temperierbare Schwarzkörperumgebungen und eine Strahlausgangsöffnung mit Detektor. Die Probe wird in einem separaten Ofen auf eine vorgegebene Temperatur aufgeheizt und zur Messung in den Strahlengang der Probenkammer mit den auf vorgegebene Temperatur eingestellten Schwarzkörperumgebungen verbracht. Die vom Detektor erfasste Intensität setzt sich aus einem Emissions-, einem Reflexions- und einem Transmissionsanteil zusammen, nämlich aus Intensität, die von der Probe selbst emittiert wird, Intensität, die vom vorderen Halbraum auf die Probe fällt und von dieser reflektiert wird, sowie Intensität, die vom hinteren Halbraum auf die Probe fällt und von dieser transmittiert wird. Zur Ermittlung der einzelnen Größen Emissions-, Reflexions- und Transmissionsgrad müssen drei Messungen durchgeführt werden.

Der am Kompositwerkstoff gemessene Emissionsgrad im Wellenlängenbereich von 2 bis etwa 4 $\mu$m hängt von der Temperatur ab. Je höher die Temperatur ist, umso höher ist die Emission. Bei 600 °C liegt der normale Emissionsgrad im Wellenlängenbereich von 2 bis 4 $\mu$m oberhalb von 0,6. Bei 1000 °C liegt der normale Emissionsgrad im gesamten Wellenlängenbereich zwischen 2 und 8 $\mu$m oberhalb von 0,75.

Die Leiterbahn 11 wird aus einer Platin-Widerstandspaste auf der Oberseite 13 des Substrats 10 erzeugt. An beiden Enden der Leiterbahn sind Klemmen zum Einspeisen elektrischer Energie angeschweißt. Die Leiterbahn 3 zeigt einen mäanderförmigen Verlauf, der eine Heizfläche der Deckenplatte 9 so dicht bedeckt, dass zwischen benachbarten Leiterbahnabschnitten ein gleichmäßiger Abstand von 2 mm verbleibt. Im gezeigten Querschnitt hat die Leiterbahn 11 Rechteckprofil mit einer Breite von 1 mm und einer Dicke von 20 $\mu$m. Sie hat direkten Kontakt mit der Oberseite 13 des Substrats 10, so dass eine größtmögliche Wärmeübertragung in das Substrat 10 erreicht wird. Die gegenüberliegende Unterseite 14 begrenzt den Prozessraum 3 und dient gleichzeitig als Abstrahlfläche für Wärmestrahlung. Die Abstrahlrichtung wird vom Richtungspfeil 15 angezeigt.

Auf der dem Prozessraum abgewandten Oberseite 13 des Substrats 10 ist eine Reflektorschicht 12 aus opakem, porenhaltigem Quarzglas aufgebracht. Sie hat eine mittlere Schichtdicke um 1,7 mm, zeichnet sich durch Rissfreiheit und eine hohe Dichte von etwa 1,7 g/cm$^3$ aus und sie ist bis Temperaturen oberhalb von 1100 °C thermisch beständig. Die Reflektorschicht 12 bedeckt die Leiterbahn 11 vollständig und schirmt sie somit vor chemischen oder mechanischen Einflüssen aus der Umgebung ab.

Bei der in den Figuren 1 und 2 dargestellten Ausführungsform des Durchlaufofens 1 bestehen nur die Deckenplatte 9 und die beiden sich gegenüberliegenden Seitenwände 3.2 des Prozessraums 3 aus dem IR-Schwarzglas, wohingegen der Boden unterhalb der Trägerelemente des Transportsystems 4 von einer Parallelanordnung von Zwillingsrohren ohne Heizfilament gebildet wird. Diese Zwillingsrohr-Anordnung ist mit einer Reflektorschicht aus opakem Quarzglas an ihrer dem Prozessraum 3 zugewandten Seite versehen. Die Reflektorschicht besteht aus kleinen Quarzglas-Partikeln mit einem Durchmesser im Bereich von circa 10 Nanometern bis 50 Mikrometern. Das fest gesinterte und entsprechend poröse $SiO_2$-Material, dessen Poren mit Luft gefüllt sind, besitzt aufgrund der winzigen Strukturen eine große spezifische Oberfläche von etwa 5 m²/g. Diese große Oberfläche fördert die schnelle indirekte Erwärmung der Luft in den Poren über die direkte Erwärmung des Quarzglases über Infrarotstrahlung.

Bei einer anderen Ausführungsform des Durchlaufofens bestehen sowohl die Auskleidungen der Decken- und Seitenwände als auch der Boden aus IR-Schwarzglas und sind in der Art wie für die Deckenplatte 9 beschrieben mit rückseitigen Leiterbahnen versehen. Sie können daher grundsätzlich (bei Bedarf) als IR-Strahler betrieben werden.

Sofern in den Figuren 2 bis 4 dieselben Bezugsziffern wie in Figur 1 verwendet sind, so sind damit baugleiche oder äquivalente Bauteile und Bestandteile bezeichnet, wie sie anhand der Beschreibung zu Figur 1 näher erläutert sind.

Die erfindungsgemäße Infrarot-Erwärmungseinheit ermöglicht im Durchlaufprozess eine sehr gleichmäßige (homogene) Erwärmung mit Infrarotstrahlung auf etwa 1000°C. Durch die sehr gleichmäßige Abstrahlung und hohe Emissivität kann der Abstand zwischen Heizgut und IR-Strahlerelement gering ausfallen, wodurch die Bestrahlungsintensität stark erhöht wird und die Energieeffizienz entsprechend zunimmt. Die Effizienz der Erwärmung liegt dabei bei einem bisher unerreichten Wirkungsgrad, der auf die quasi-schwarze Auskleidung des Prozessraums mit einer Emissivität von mehr al 0,75 (bei 1000 °C) zurückzuführen ist. Durch die hohe Emissivität wird die absorbierte Rückstreuung aus dem Prozessraum sofort dem Prozessraum zur Erwärmung des Produkts wieder zugeführt, so dass Verluste minimiert sind. Durch den quasi geschlossenen Prozessraum wird die erzeugte Konvektion zur Erwärmung mit ausgenutzt. Die hohe Leistungsdichte von mehr als 200 kW/m² resultiert zum großen Teil aus dem geringen Abstand zwischen dem Heizgut und dem IR-Strahler.

Das Fördersystem aus transparentem Quarzglas sorgt ebenso wie der Prozessraum auch für eine hohe Reinheit des Gesamtsystems. Die IR-Erwärmungseinheit ist von ihrer Reinheit her halbleitertauglich. Des Weiteren ist keine Kühlung erforderlich, so dass keine Partikelbewegung durch Ventilatoren auftritt.

Im Folgenden wird ein Verfahren zur Herstellung der Deckenplatte 9 an einem Beispiel näher erläutert.

Die Herstellung erfolgt anhand des Schlickergießverfahrens, wie es in der WO 2015067688 A1 beschrieben ist. Amorphe Quarzglaskörnung wird vorab in einem Heißchlorierverfahren gereinigt, wobei darauf geachtet wird, dass der Cristobalitgehalt unter 1 Gew.-% liegt. Quarzglaskörnung mit Korngrößen im Bereich zwischen 250 μm und 650 μm wird mit deionisiertem Wasser nassgemahlen, so dass sich ein homogener Grundschlicker mit einem Feststoffgehalt von 78 % bildet.

Anschließend werden aus dem Grundschlicker die Mahlkugeln entfernt und es wird ein Zuschlag in Form von Silicium-Pulver in einer Menge zugemischt, bis ein Feststoffgehalt von 83 Gew.-% erreicht ist. Das Silicium-Pulver enthält hauptsächlich nicht-sphärische Pulverteilchen mit enger Teilchengrößenverteilung, deren $D_{97}$-Wert bei etwa 10 μm liegt und dessen Feinanteil mit Teilchengrößen von weniger als 2 μm vorab entfernt worden ist.

Der mit dem Silicium-Pulver gefüllte Schlicker wird weitere 12 Stunden homogenisiert. Der Gewichtsanteil des Silicium-Pulvers am gesamten Feststoffgehalt liegt bei 5 %. Die $SiO_2$-Teilchen im fertig homogenisierten Schlicker zeigen eine Teilchengrößenverteilung, die durch einen $D_{50}$- Wert von etwa 8 μm und durch einen $D_{90}$-Wert von etwa 40 μm gekennzeichnet ist.

Der Schlicker wird in eine Druckgussform einer kommerziellen Druckgussmaschine gegossen und über eine poröse Kunststoffmembran unter Bildung eines porösen Grünkörpers entwässert. Der Grünkörper hat die Form einer Rechteckplatte. Zum Entfernen von gebundenem Wasser wird der Grünkörper bei etwa 90 °C fünf Tage lang in einem belüfteten Ofen getrocknet. Nach dem Abkühlen wird der erhaltene poröse Rohling mechanisch nahezu auf das Endmaß der herzustellenden Quarzglas-Platte mit der Plattenstärke von 2,5 mm bearbeitet. Zum Sintern des Rohlings wird dieser in einem Sinterofen unter Luft innerhalb von einer Stunde auf eine Heiztemperatur von 1390 °C aufgeheizt und bei dieser Temperatur 5h gehalten.

Die so erhaltene Quarzglasplatte (10) besteht aus einem gasdichten Kompositwerkstoff mit einer Dichte von 2,1958 g/cm³, bei dem in einer Matrix aus opakem Quarzglas voneinander getrennte, nicht-sphärische Bereiche aus elementarer Si-Phase homogen verteilt sind, deren Größe und Morphologie weitgehend denen des eingesetzten Si-Pulvers entsprechen. Die maximalen Abmessungen liegen im Mittel (Medianwert) im Bereich von etwa 1 bis 10 μm. Die Matrix wirkt visuell transluzent. Sie zeigt bei mikroskopischer Betrachtung keine offenen Poren und allenfalls geschlossene Poren mit maximalen Abmessungen von im Mittel weniger als 10 μm; die auf Basis der Dichte berechnete Porosität liegt bei 0,37%. Der Kompositwerkstoff ist an Luft bis zu einer Temperatur von etwa 1200 °C stabil.

Die Quarzglasplatte (10) wird oberflächlich geschliffen, so dass eine mittlere Oberflächenrauigkeit Ra von etwa 1 μm eingestellt wird. Auf ihrer geschliffenen Oberseite 5 wird anhand eines Siebdruckverfahrens die mäanderförmige Leiterbahn 11 aufgebracht. Dafür wird eine handelsübliche Platin-haltige Widerstandspaste eingesetzt.

Nach dem Trocknen der Leiterbahn 11 wird auf der Oberseite 13 der Quarzglasplatte 10 eine Schlickerschicht aufgebracht. Dieser Schlicker wird durch Modifikation des $SiO_2$-Grundschlickers erhalten, wie er oben bereits beschrieben ist (ohne einen Zuschlag von Silicium-Pulver), indem dem homogenen, stabilen Grundschlicker amorphe $SiO_2$-Körnung in Form sphärischer Teilchen mit einer Korngröße um 5 $\mu$m zugemischt werden bis ein Feststoffgehalt von 84 Gew.-% erreicht ist. Diese Mischung wird 12 Stunden lang in einer Trommelmühle bei einer Drehzahl von 25 U/min homogenisiert. Der so erhaltene Schlicker hat einen Feststoffgehalt von 84% und eine Dichte von etwa 2,0 g/cm$^3$. Die nach dem Vermahlen der Quarzglaskörnung erhaltenen $SiO_2$-Teilchen im Schlicker zeigen eine Teilchengrößenverteilung, die durch einen $D_{50}$-Wert von etwa 8 $\mu$m und durch einen $D_{90}$-Wert von etwa 40 $\mu$m gekennzeichnet ist.

In diesen Schlicker wird einige Sekunden lang die vorab in Alkohol gereinigte Quarzglasplatte 10 eingetaucht. Auf der Quarzglasplatte 10 bildet sich dadurch eine gleichmäßige Schlickerschicht mit einer Dicke von etwa 2 mm. Nach dem Abwischen von der Unterseite 146 wird die Schlickerschicht zunächst ca. 5 Stunden bei Raumtemperatur und anschließend mittels eines IR-Strahlers an Luft getrocknet. Die getrocknete Schlickerschicht ist rissfrei, und sie hat eine mittlere Dicke von etwas weniger als 2 mm.

Die getrocknete Leiterbahn und die getrocknete Schlickerschicht werden anschließend unter Luft in einem Sinterofen eingebrannt beziehungsweise gesintert. Das Heizprofil umfasst eine Heiztemperatur von 1200 °C. Die Haltezeit beträgt im Ausführungsbeispiel zwei Stunden. Danach ist die Leiterbahn 11 eingebrannt und die Schlicker-Schicht 12 opak, jedoch visuell dicht und weitgehend blasenfrei.

Die erfindungsgemäße Infrarot-Erwärmungseinheit mit Heizelementen aus IR-Schwarzglas verfügt über eine geringe thermische Masse und damit über eine schnelle Reaktionszeit (<10s) und ist - abhängig von der Belegungsdichte der Leiterbahn - sehr homogen in der Abstrahlung. Das IR-Schwarzglas sorgt sowohl für eine sehr gute Abstrahlungscharakteristik (breitbandige, hohe Emission bei hohen Temperaturen) und es besitzt eine Reinheit, die in Halbleiterprozessen gefordert ist. Weiterhin benötigen die Kacheln keine zusätzliche Kühlung.

Die erfindungsgemäße Infrarot-Erwärmungseinheit, die wie hier beschrieben mit einem planaren, plattenförmigen IR-Strahler ausgestattet ist, kann in der Druckindustrie eingesetzt werden, um hohe Prozessgeschwindigkeiten (>100m/s) bei sehr hoher Leistungsdichte (>100 kW/m$^2$ pro beheizter Seite) und kleinen Abständen zum Heizgut (< 5mm) zu realisieren, welches beispielsweise in Bandform am IR-Strahler vorbeigeführt wird. Eine elektrisch leitfähige Metallschicht kann darauf mittels Siebdruckverfahren aufgebracht werden.

Eine weitere Anwendung liegt im Bereich des 3D-Drucks. Aufgrund der hohen Flächenleistung und der hohen Arbeitstemperatur (bis ca. 1000°C) können verdruckte metallische Pulver angesintert beziehungsweise gesintert werden.

Dabei kann die erfindungsgemäße Infrarot-Erwärmungseinheit beispielsweise als allseitig geschlossener Kammerofen ausgelegt sein. Ein Kammerofen mit Rechteckquerschnitt verfügt über sechs als Heizsubstrate ausgelegte, plane Ofenauskleidungen, die eine Leistungsdichte von mindestens 600 kW/m$^2$ (mindestens 100 kW/m$^2$ pro beheizter Seite) und sogar deutlich mehr (mindestens 200 kW/m$^2$ pro beheizter Seite) erzeugen können.

Grundsätzlich kommen die für die Anwendungen hervorragenden Eigenschaften von Quarzglas zum Tragen, beispielsweise die hohe Temperaturwechselbeständigkeit, die chemische Inertheit, die hohe Festigkeit und die Reinheit.

**Patentansprüche**

1.  Infrarot-Erwärmungseinheit mit einem Ofen (1), der ein einen Prozessraum (3) aufnehmendes Gehäuse (2) und eine Heizeinrichtung aufweist, wobei die Heizeinrichtung von mindestens einem Heizsubstrat (9) gebildet wird, das eine Kontakt-Oberfläche (13) aufweist, die in Kontakt mit einer Leiterbahn (11) aus einem elektrisch leitenden und bei Stromdurchfluss Wärme erzeugenden Widerstandsmaterial ist, wobei das Heizsubstrat (9) mindestens einen Teil der Ofenauskleidung (3.1, 3.2, 3.3) bildet, **dadurch gekennzeichnet, dass** der Prozessraum (3) mindestens teilweise von einer Ofenauskleidung aus Quarzglass begrenzt ist, wobei die Kontakt-Oberfläche (13) mindestens teilweise mit einer Deckschicht (12) aus porösem Quarzglas belegt ist, wobei das Heizsubstrat (9)

    • aus dotiertem Quarzglas besteht, in das eine im infraroten Spektralbereich absorbierende Zusatzkomponente eingelagert ist.

2.  Infrarot-Erwärmungseinheit nach Anspruch 1, **dadurch gekennzeichnet, dass** die Ofenauskleidung (3.1, 3.2, 3.3) vollständig aus dem dotierten Quarzglas gebildet wird.

3.  Infrarot-Erwärmungseinheit nach Anspruch 1 oder 2, **dadurch gekennzeichnet, dass** zwischen einem Heizgut und dem Heizsubstrat ein Abstand von weniger als 5 mm einstellbar ist.

4.  Infrarot-Erwärmungseinheit nach einem der vorhergehenden Ansprüche, **dadurch gekennzeichnet, dass** die Zusatzkomponente elementares Silicium ist und in einer Menge - bezogen auf das Gewicht des Heizsubstrats (9) - im Bereich zwischen 0,1 und 5 Gew.-% eingelagert ist, die im Heizsubstrat-Werkstoff für Wellenlängen zwischen 2 und 8 $\mu$m einen spektralen Emissionsgrad $\varepsilon$ von mindestens 0,6 bei einer Temperatur von 600 °C und einen spektralen Emissionsgrad $\varepsilon$ von mindestens 0,75 bei einer Temperatur von 1000 °C bewirkt.

**5.** Infrarot-Erwärmungseinheit nach einem der vorhergehenden Ansprüche, **dadurch gekennzeichnet, dass** die Leiterbahn (11) als eingebrannte Dickfilmschicht und als Linienmuster ausgeführt ist, das die Kontakt-Oberfläche (13) so bedeckt, dass zwischen benachbarten Leiterbahn-Abschnitten ein Zwischenraum von mindestens 1 mm, bevorzugt mindestens 2 mm verbleibt.

**6.** Infrarot-Erwärmungseinheit nach einem der vorhergehenden Ansprüche, **dadurch gekennzeichnet, dass** das Heizsubstrat (9) plattenförmig mit einer Plattendicke von weniger al 5 mm ausgebildet ist.

**7.** Infrarot-Erwärmungseinheit nach einem der vorhergehenden Ansprüche, **dadurch gekennzeichnet, dass** zum Transport von Heizgut (5) durch den Prozessraum (3) eine Transporteinrichtung (4) vorgesehen ist, die sich durch den Prozessraum (3) hindurch erstreckt und die Auflageelemente (4.2) aus Quarzglas aufweist, auf denen das Heizgut (5) gelagert ist.

**8.** Infrarot-Erwärmungseinheit nach Anspruch 7, **dadurch gekennzeichnet, dass** die Transporteinrichtung (4) zwei parallel und beabstandet voneinander verlaufende Endlos-Transportbänder (4.1) aufweist, wobei die Auflageelemente in Form von den Abstand zwischen den Transportbändern (4.1) überbrückenden Quarzglaszylindern (4.2) ausgeführt und mit den Transportbändern (4.1) drehfest verbunden sind.

**9.** Infrarot-Erwärmungseinheit nach Anspruch 8, **dadurch gekennzeichnet, dass** die Quarzglaszylinder (4.2) eine Beschichtung aus opakem Quarzglas aufweisen.

**10.** Infrarot-Erwärmungseinheit nach einem der vorhergehenden Ansprüche, **dadurch gekennzeichnet, dass** die Ofenauskleidung mindestens eine beheizte Seite aufweist und dass die Heizeinrichtung zur Erzeugung einer Gesamtflächenleistungsdichte im Bereich von mehr als 100 kW/m$^2$ pro beheizter Seite ausgelegt ist

**Claims**

**1.** Infrared heating unit with a furnace (1), comprising a housing (2) that accommodates a process space (3), and a heating facility, the heating facility is formed by at least one heating substrate (9) defining a contact surface (13) that is in contact with a conductor track (11) that is made of a resistor material that is electrically conductive and generates heat when current flows through it, whereby the heating substrate (9) forms at least a part of the furnace lining (3.1, 3.2, 3.3), **characterised in that** the process space (3) is bordered, at least in part, by a furnace lining made of quartz glass, wherein the contact surface (13) is covered, at least in part, by a cover layer (12) made of porous quartz glass and wherein the heating substrate

   • consists of doped quartz glass, into which an additional component that absorbs in the infrared spectral range is embedded.

**2.** Infrared heating unit according to claim 1, **characterised in that** the furnace lining (3.1, 3.2, 3.3) is fully made of the doped quartz glass.

**3.** Infrared heating unit according to claim 1 or 2, **characterised in that** the distance between a heating good and the heating substrate is adjustable to less than 5 mm.

**4.** Infrared heating unit according to any one of the preceding claims, **characterised in that** the additional component is elemental silicon and is embedded in an amount in the range of 0.1 to 5% by weight; relative to the weight of the heating substrate (9), that effects in the heating substrate material for wavelengths between 2 and 8 $\mu$m, an emissivity $\varepsilon$ of at least 0.6 at a temperature of 600 °C and an emissivity $\varepsilon$ of at least 0.75 at a temperature of 1,000°C.

**5.** Infrared heating unit according to any one of the preceding claims, **characterised in that** the conductor track (11) is provided as a burned-in thick film layer and as a line pattern that covers the contact surface (13) appropriately such that an intervening space of at least 1 mm, preferably at least 2 mm, remains between neighbouring sections of the conductor tracks.

**6.** Infrared heating unit according to any one of the preceding claims, **characterised in that** the heating substrate (9) is provided to be plate-shaped and to have a plate thickness of less than 5 mm.

**7.** Infrared heating unit according to any one of the preceding claims, **characterised in that**, a transport facility (4) for the transport of heating good (5) through the process space (3) is provided that extends through the process space (3) and comprises support elements (4.2) made of quartz glass on which the heating good is supported.

**8.** Infrared heating unit according to claim 7, **characterised in that** the transport facility (4) comprises two continuous transport belts (4.1) that run parallel to and at a distance from each other, whereby the support elements are provided in the form of quartz glass cylinders (4.2) that bridge the distance between the transport belts (4.1) and are connected to the transport belts (4.1) in a torque-proof manner.

9. Infrared heating unit according to claim 8, **characterised in that** the quartz glass cylinders (4.2) comprise a coating made of opaque quartz glass.

10. Infrared heating unit according to any one of the preceding claims, **characterised in that** the furnace lining comprises at least one heated side and **in that** the heating facility is designed for generation of an overall power density per surface area in the range of more than 100 kW/m$^2$ per heated side.

**Revendications**

1. Unité de chauffage infrarouge comprenant un four (1), qui comporte un logement (2) logeant une chambre de processus (3) et un dispositif de chauffage, le dispositif de chauffage étant formé par au moins un substrat chauffant (9), qui comporte une surface de contact (13), qui est en contact avec une piste conductrice (11) en un matériau résistif électriquement conducteur et générant de la chaleur lorsqu'un courant le traverse, le substrat chauffant (9) formant au moins une partie du garnissage de four (3.1, 3.2., 3.3), **caractérisée en ce que** la chambre de processus (3) est limitée au moins en partie par un garnissage de four en verre de quartz, la surface de contact (13) étant revêtue au moins en partie par une couche superficielle (12) en verre de quartz poreux, le substrat chauffant (9)

   • consistant en verre de quartz dopé, dans lequel est incorporé un composant additionnel absorbant dans le domaine spectral infrarouge.

2. Unité de chauffage infrarouge selon la revendication 1, **caractérisée en ce que** le garnissage de four (3.1, 3.2, 3.3) est formé entièrement à partir du verre de quartz dopé.

3. Unité de chauffage infrarouge selon la revendication 1 ou 2, **caractérisée en ce qu'**une distance inférieure à 5 mm peut être réglée entre un produit à chauffer et le substrat chauffant.

4. Unité de chauffage infrarouge selon l'une des revendications précédentes, **caractérisée en ce que** le composant additionnel est du silicium élémentaire et est incorporé dans une quantité - par rapport au poids du substrat chauffant (9) - dans la plage comprise entre 0,1 et 5 % en poids, qui effectue dans le matériau du substrat chauffant, pour des longueurs d'onde entre 2 et 8 μm, une émissivité spectrale ε d'au moins 0,6 à une température de 600 °C et une émissivité spectrale ε d'au moins 0,75 à une température de 1000 °C.

5. Unité de chauffage infrarouge selon l'une des revendications précédentes, **caractérisée en ce que** la piste conductrice (11) est réalisée sous la forme d'une couche épaisse cuite et d'un motif de lignes, qui recouvre la surface de contact (13) de telle sorte qu'il reste, entre des portions adjacentes de piste conductrice, un espace intermédiaire d'au moins 1 mm, de préférence au moins 2 mm.

6. Unité de chauffage infrarouge selon l'une des revendications précédentes, **caractérisée en ce que** le substrat chauffant (9) est conçu en forme de plaque avec une épaisseur de plaque inférieure à 5 mm.

7. Unité de chauffage infrarouge selon l'une des revendications précédentes, **caractérisée en ce qu'**un système de transport (4) est prévu pour le transport d'un produit à chauffer (5) à travers la chambre de processus (3), ledit système de transport s'étendant à travers la chambre de processus (3) et comportant des éléments d'appui (4.2) en verre de quartz, sur lesquels le produit à chauffer (5) est placé.

8. Unité de chauffage infrarouge selon la revendication 7, **caractérisée en ce que** le système de transport (4) comporte deux bandes transporteuses (4.1) sans fin parallèles et espacées l'une de l'autre, les éléments d'appui étant réalisés sous la forme de cylindres en verre de quartz (4.2) franchissant l'écart entre les bandes transporteuses (4.1) et étant reliés aux bandes transporteuses (4.1) de manière solidaire en rotation.

9. Unité de chauffage infrarouge selon la revendication 8, **caractérisée en ce que** les cylindres en verre de quartz (4.2) comportent un revêtement en verre de quartz opaque.

10. Unité de chauffage infrarouge selon l'une des revendications précédentes, **caractérisée en ce que** le garnissage de four comporte au moins un côté chauffé et **en ce que** le dispositif de chauffage est conçu pour générer une densité surfacique de puissance totale dépassant 100 kW/m$^2$ par côté chauffé.

# Fig.1

# Fig.2

**Fig. 3**

**Fig. 4**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 1973753 U
- DE 102012003030 A1
- US 4133667 A
- JP 4715019 B
- US 4833301 A
- EP 0495770 A1
- US 4245613 A
- WO 1999025154 A1
- WO 2015067688 A1
- WO 2006021416 A1

**In der Beschreibung aufgeführte Nicht-Patentliteratur**

- **J. MANARA ; M. KELLER ; D. KRAUS ; M. ARDUINI-SCHUSTER.** DETERMINING THE TRANSMITTANCE AND EMITTANCE OF TRANSPARENT AND SEMITRANSPARENT MATERIALS AT ELEVATED TEMPERATURES. *5th European Thermal-Sciences Conference,* 2008